# EUROPEAN PATENT SPECIFICATION

(11) **EP 0 415 157 B1**
(45) Date of publication and mention of the grant of the patent: **08.11.1995**
(21) Application number: 90115429.4
(22) Date of filing: 10.08.1990
(51) Int. Cl.: B60L 3/12, B60L 9/22, B60L 9/00, G05B 9/03

(54) **A control system for an electric vehicle**
System zur Regelung eines elektrischen Farhrzeuges
Système de commande pour un véhicule électrique

(30) Priority: 30.08.1989 JP 221493/89
(43) Date of publication of application: 06.03.1991
(73) Proprietor: HITACHI, LTD., Chiyoda-ku, Tokyo 101 (JP)
(72) Inventor: Sakamoto, Hideo, 3174-14, Nakane, Katsuta-shi (JP); Okamatsu, Shigetoshi, Katsuta-shi (JP); Kotake, Kazuyoshi, Katsuta-shi, (JP)
(74) Representative: Strehl Schübel-Hopf Groening & Partner

(56) References cited:
- EP-A- 0 222 047
- PATENT ABSTRACTS OF JAPAN vol. 8, no. 151 (P-286)(1588) 13 July 1984 & JP-A-59 047612
- PATENT ABSTRACTS OF JAPAN vol. 6, no. 188 (P-144)(1066) 28 September 1982 & JP-A-57 100 501
- PATENT ABSTRACTS OF JAPAN vol. 12, no. 238 (P-726) 7 July 1988 & JP-A-63 030 901
- PATENT ABSTRACTS OF JAPAN vol. 9, no. 242 (M-417)(1965) 28 September 1985 & JP-A-60 096 101
- PATENT ABSTRACTS OF JAPAN vol. 7, no. 10 (P-168)(1155) 14 January 1983 & JP-A-57 166 602
- PATENT ABSTRACTS OF JAPAN vol. 13, no. 106 (E-726)(3454) 14 March 1989 & JP-A-63 276 930

## Description

### BACKGROUND OF THE INVENTION

The present invention relates to a control system for controlling a power converter and more particularly to a control system for controlling a power converter suitable for railway electric vehicles.

As the power converter for use in the drive system of an electric vehicle, there are available an AC-DC converter or a combination of AC-DC converter and DC-AC inverter employed in AC electric railway and a DC-DC chopper or DC-AC inverter employed in DC electric railway.

Conventionally, it has been general practice that stopping or coasting of an electric vehicle is achieved by stopping the application of a gate pulse to an inverter or chopper serving as power converter unit and at the same time opening a line breaker (LB) inserted in the main circuit. Accordingly, even if the gate pulse is delivered accidentally to the power converter unit when the electric vehicle is in stop or coasting condition, the line breaker kept open can prevent the electric vehicle from falling into runaway.

Incidentally, the line breaker is thrown in and out repetitively each time that a power running or braking notch of the electric vehicle is turned on and off, and if the line breaker has a life of 3,000,000 operations, it can be durable for about 10 years (300,000 operations/year). The line breaker is thus operable on the premise that it is turned on and off each time that the notch is turned on and off, and is required to have a life of more than 1,000,000 operations.

Conceivably, however, for the purpose of extending the life of the line breaker, the line breaker may remain closed and only the application of the gate pulse may be stopped even when the electric vehicle stops or coasts. But if with the line breaker closed the gate pulse is delivered by accident, there arises a danger that the electric vehicle falls into runaway.

Especially, in many applications, the controller for delivering a gate control signal on which the gate pulse is based is constructed of a microcomputer and the possibility of the occurrence of fault and abnormality in the digital input port of the controller can not be negated, resulting in possible incurrence of the danger of runaway of the electric vehicle.

On the other hand, an operation start command for the power converter unit is typically given in the form of a voltage of 100 volts from a battery of the electric vehicle and this operation start command is converted from 100 volts to 5 volts within the controller and then applied to the microcomputer.

In comparison with 100 volts, however, the 5-volt level is so low that it is liable to be interfered with by electrical noise and there arises a danger that the controller operates erroneously to generate a gate control signal, causing the gate driver to erroneously deliver a gate pulse.

JP-A-52-154017 discloses a technique wherein with the aim of alleviating the danger of the generation of a gate pulse even in the event that fusion of contacts occurs in a gate pulse amplifier (gate driver), the power supply of the gate pulse amplifier is turned off by the action of a contact of an operation disabling relay and in addition, gate block is applied to contactless logic in response to the disappearance of voltage across that relay.

JP-A-63-276930 discloses a technique wherein a signal indicative of start/stop as well as a carrier is superimposed on a start/stop signal for a power converter and a means for identifying the carrier is additionally provided in the receiver, thus improving reliability.

According to the technique disclosed in JP-A-52-154017, in spite of deactivation of the relay for managing operation/stop, the gate driver applies a double block to the power and logic systems to prevent the generation of a gate pulse applied to the power converter. But it is no exaggeration to say that the determination of inhibition or permission of the gate pulse by means of the gate driver is impossible to realize, especially, in a power converter using GTO's and thyristors because it invites breakage of those elements. In addition, this prior art is not for checking the command per se as applied to the on/off switch S for operating the relay and in the event that for example the microcomputer for generating the gate control signal (on which the gate pulse is based) applied to the gate driver becomes abnormal or the switch S operative by receiving the start/stop command for the power converter is fused, there remains the danger that gate pulse is delivered to the power converter even in the absence of the start/stop command.

According to the technique disclosed in the latter JP-A-63-276930, the function of discriminating the normal start/stop signal from the noise can be insured but it is impossible to prevent an erroneous operation which would occur when the input port being in abnormal of faulty condition makes an error in identifying the normal start/stop signal. In addition, the transmitter and receiver are both complicated inevitably.

JP-A-59-47612 discloses a circuit for checking input information, comprising a duplicating input circuit which duplicates an input information, and a comparator circuit which compares the input information from the input circuit with control output information to decide the propriety of the input information.

JP-A-57 100 501 discloses a load controller comprising a main microcomputer and a secondary microcomputer which are interconnected. When the main computer produces a load-ON signal to turn on the load, it delivers a command signal to the secondary microcomputer. In response to this command signal, the secondary microcomputer returns an acknowledgement signal to the main microcomputer and further produces a load-ON signal. This latter signal and the original load-ON signal from the main microcomputer are applied to inputs of a logic circuit which outputs a signal to turn on the load when both input signals exist.

### SUMMARY OF THE INVENTION

An object of the invention is to reduce the chance of inviting an erroneous operation of the power converter which would occur when the start command for the power converter is erroneously identified.

The present invention is defined by the claims.

According to the invention, even when one of the two input means acknowledges the receipt of the start command, the control signal to be applied to the power converter is not generated unless the other input means acknowledges the receipt of the start command.

Therefore, even in the presence of an erroneous identification of the start command due to noise or fault, the power converter will not be started erroneously and, for example, the danger of runaway of an electric vehicle in railway can be alleviated remarkably.

### BRIEF DESCRIPTION OF THE DRAWINGS

Fig. 1 is a block diagram illustrating an electric vehicle control system according to a preferred embodiment of the invention;
Fig. 2 is a flow chart showing the operation of a gate control signal generator (control section) of the control system;
Fig. 3 is a flow chart showing the operation of a diagnostic section of the control system; and
Figs. 4 and 5 are block diagrams illustrating other embodiments of electric vehicle control systems according to the invention.

### DESCRIPTION OF THE PREFERRED EMBODIMENTS

The invention will now be described, by way of example only, using preferred embodiments thereof with reference to the accompanying drawings.

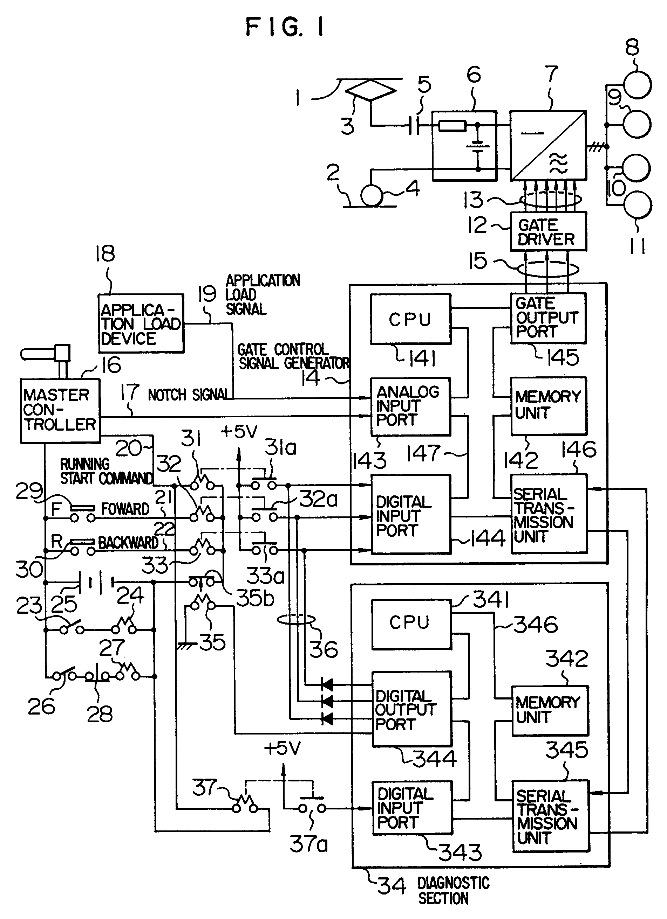

Fig. 1 is a block diagram illustrating an inverter type electric vehicle or car to which the invention is applied in DC electric railway.

DC voltage applied across a DC overhead line 1 and rails 2 is collected by a pantograph 3 and wheels 4. The DC voltage is then supplied to a variable-voltage variable-frequency (VVVF)/pulse width modulation (PWM) three-phase inverter 7 utilizing GTO's through a line breaker (LB) 5 openable in the presence of abnormality such as overcurrent or overvoltage and an inverted L-type filter 6. The output VVVF three-phase AC current of the inverter 7 is fed to main motors 8 to 11.

The inverter 7 receives a gate pulse signal 13 from a gate driver 12 to permit internal GTO's to perform PWM control.

The gate driver 12 is operable on the basis of a gate control signal 15 delivered out of a gate control signal generator 14 to amplify a gate control signal used for each of the upper and lower GTO arms at each one of the three phases.

The gate control signal generator 14 comprises a microcomputer including a central processing unit (CPU) 141, a memory unit 142, an analog input port 143, a digital input port 144, a gate output port 145, a serial transmission unit 146 and a computer bus 147. The analog input port 143 of the gate control signal generator 14 receives a notch signal 17 of a DC voltage proportional to a notch position from a master controller 16 and an application load signal 19 of a DC voltage proportional to a load from an application load device 18. On the other hand, the digital input port 144 is supplied with, in a manner to be described later, a running start command 20 and a forward signal 21 or a backward signal 22 from the master controller 16. The gate control signal generator 14 is also supplied with a motor rotation speed signal, a motor current signal and a filter capacitor (power supply) voltage signal to generate a pulse width modulated gate control signal 15 throughout known control operation ranging from VVVF control to constant-voltage variable-frequency (CVVF) control, these signals having no direct relation to the present invention and the supply thereof not being illustrated in Fig. 1.

When a switch 23 for raising the pantograph is closed, a coil 24 of an electromagnetic valve operative to raise the pantograph 3 is energized by a battery 25 and the pantograph is raised. Subsequently, when a switch 26 for throwing in the line breaker 5 is closed, a throw-in coil 27 is energized with the result that the line breaker 5 is thrown in and the inverter 7 is connected to the power supply. Then, the line breaker 5 remains thrown in until the switch 26 is opened at the end of the operation, so long as a contact 28 connected in series with the throw-in coil 27 is not opened on account of overcurrent or over-voltage.

By manipulating a reverser (not shown), a forward contact 29 (F) or a backward contact 30 (R) is thrown in and by manipulating the master controller 16, the power running or brake notch is turned on, so that a relay 31 can be energized by a running start command signal 20, a relay 32 can be energized by a forward signal and a relay 33 can be energized by a backward signal, thereby turning on corresponding contacts 31a, 32a and 33a. Under this condition, a command signal is supplied from a power supply of +5 volts to the digital input port 144 of the gate control signal generator 14.

In this embodiment, in addition to the above construction, a diagnostic section 34 is provided. The diagnostic section 34 comprises a microcomputer including a central processing unit 341, a memory unit 342, a digital input port 343, a digital output port 344, a serial transmission unit 345 and a computer bus 346.

The diagnostic section 34 diagnoses fault of the gate control signal generator 14 in a manner as below.

More particularly, the digital output port 344 of the diagnostic section 34 energizes a relay 35 to open its contact 35b at, for example, the beginning of the operation, thereby invalidating the manipulation commands from the master controller and reverser (not shown) to ensure that a simulation command signal 36 can be supplied to the digital input port 144 of the gate control signal generator 14. This allows the diagnostic section 34 to receive the results of operation in the gate control signal generator 14 from the serial transmission unit 146 of generator 14 through the serial transmission unit 345 of section 34 and to diagnose whether the gate control signal generator is normal or not. If abnormality of the gate control signal generator is determined by the results of the diagnosis, the line breaker (LB) 5 in the main circuit is thrown out.

On the other hand, as described previously, the line breaker 5 in the electric car main circuit is not opened each time that the notch is turned on and off by the master controller but it is thrown in at the beginning of the operation and remains thrown in until the end of the operation unless abnormality such as overcurrent or overvoltage occurs. Accordingly, there is a danger that if the digital input port 144 operates erroneously, a gate pulse signal 13 will be delivered to the inverter 7 even in the absence of the running start command 20.

To cope with this problem, in the presence of a running start command signal 20, a relay 37 receives this signal to close its contact 37a, permitting +5 volts to be supplied to the digital input port 343 of the diagnostic section 34. Receiving this running start command, the CPU 341 of the diagnostic section 34 operates to enable the serial transmission unit 345 to send a signal for permitting the generation of a gate control signal to the serial transmission unit 146 of the gate control signal generator 14. In this manner, the gate control signal generator 14 is permitted to deliver the gate control signal 15 only when receiving the running start command signal supplied to the generator 14 per se and the permission signal from the diagnostic section 34.

Thus, the chance of generating an erroneous gate pulse 13 due to a fault of, for example, the digital input port 144 even in the absence of the running start command signal can be reduced remarkably to alleviate the danger of runaway of the electric car due to the erroneous start of the power converter (inverter) 7.

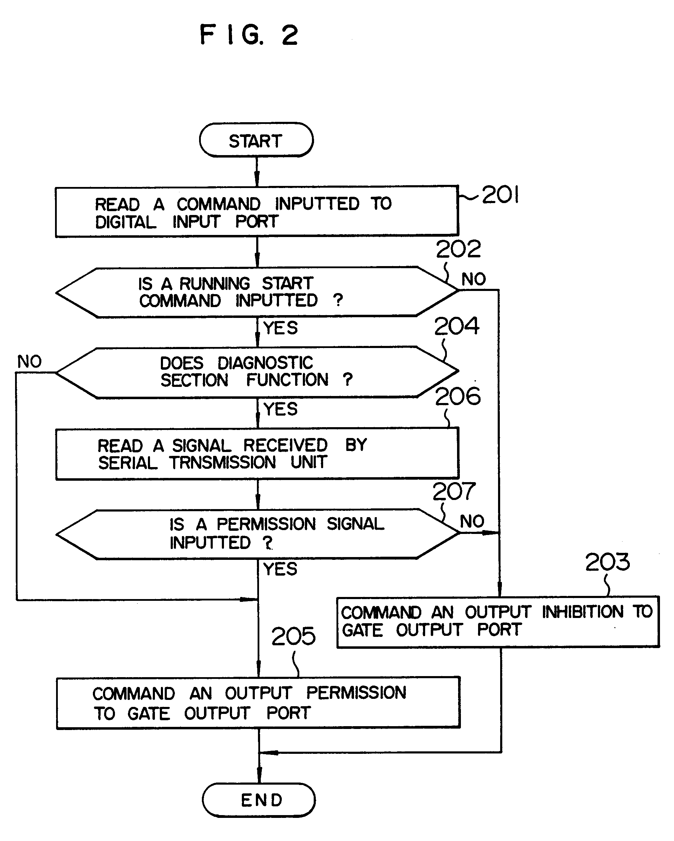

Fig. 2 is a flow chart of a program stored in the memory unit 142 of the gate control signal generator 14 shown in Fig. 1 and executed by the CPU 141. In step 201, a command inputted to the digital input port 144 is read. Subsequently, it is decided in step 202 whether a running start command 20 is inputted. If no running start command is inputted, the program proceeds to step 203 where an output inhibition is commanded to the gate output port 145. On the other hand, if the running start command is inputted, the program proceeds to step 204 where it is decided whether the diagnostic section 34 functions normally. A kind of known watchdog timer will do this decision satisfactorily. If the diagnostic section 34 is decided not to function, it is determined that an output permission command is permitted to be supplied to the gate output port on the basis of the inputted running start command mentioned above and the program proceeds to step 205. But if the diagnostic section 34 is determined to function normally, the program proceeds to step 206 where a signal received by the serial transmission unit 146 is read and in step 207, it is decided whether a permission signal received from the serial transmission unit 345 of the diagnostic section 34 through the serial transmission unit 146 of the generator 14 exists. If the decision results indicate that the permission signal is inputted, the program proceeds to the aforementioned step 205 where delivery of the gate control signal is permitted but if no permission signal is inputted, the program proceeds to the step 203 where delivery of the gate control signal is inhibited.

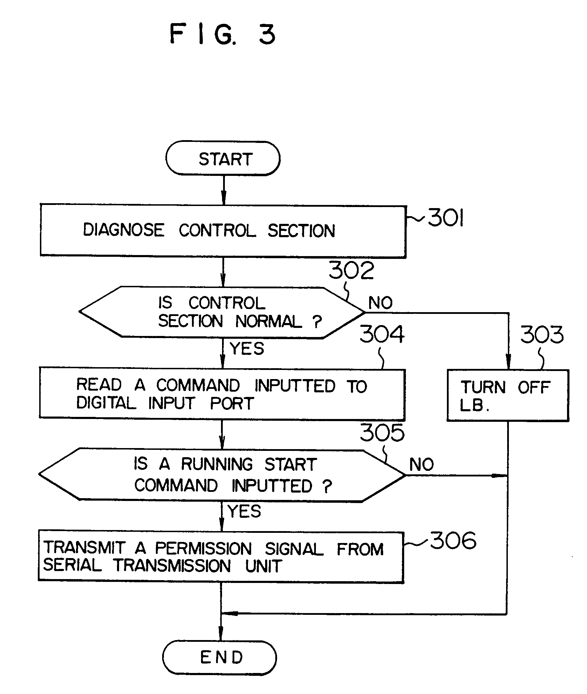

Fig. 3 is a flow chart showing a program stored in the memory unit 342 of the diagnostic section 34 shown in Fig. 1 and executed by the CPU 341.

In step 301, the serial transmission units 345 and 146 serving as a diagnostic interface are used to diagnose the gate control signal generator 14 in the manner described previously. If the gate control signal generator 14 is determined to be abnormal in step 302, the program proceeds to step 303 where the main circuit line breaker (LB) 5 is turned off. This is because so long as the LB remains thrown in, power supply voltage is applied to the power converter 7 and if under this condition, abnormality occurs in the gate pulse control signal generator 14, there is a great possibility that the danger of runaway of the electric car may occur which is caused by an erroneous start of the power converter 7 due to an erroneous gate pulse.

If, in step 302, the generator 14 is determined to be normal, the program proceeds to step 304 where a command supplied to the digital input port 343 is read. Then, in step 305, it is decided whether a running start command 20 is inputted. If no start command is inputted, nothing is done and the program ends but if the running start command is inputted, the program proceeds to step 306 where a permission signal is sent to the generator 14 through the serial transmission unit 345.

Thus, even if the digital input port 144, for example, operates erroneously and inputting of the running start command 20 is determined erroneously in spite of the fact that the absence of the running start command 20 is determined in the step 202 in Fig. 2, inputting of the permission signal is negated in step 207 and therefore a gate stop is commanded to the gate output port 145 in step 203. Accordingly, gate pulse signal 13 will not be delivered to the inverter 7 accidentally, preventing runaway of the electric car. The diagnostic section 34 has essentially the main function of diagnosing the generator or control section 14 but may also be provided with the additional function of preventing runaway of the electric car in an economical manner by adding only one component of the digital input port.

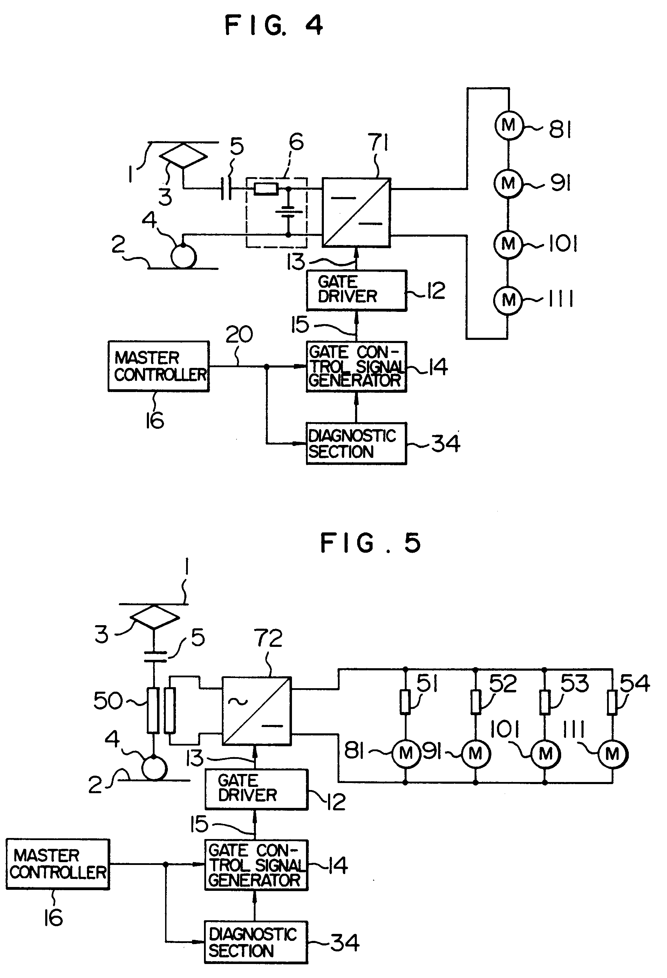

Fig. 4 shows another embodiment in which the invention is adopted in a chopper type electric car. This embodiment differs from the Fig. 1 embodiment in that a chopper 71 is used as the power converter unit in place of the inverter and DC motors 81, 91, 101 and 111 are used as the motors.

Fig. 5 shows still another embodiment of the invention which differs from the Fig. 1 embodiment in that a converter 72 is used as the power converter unit and DC motors 81, 91, 101 and 111 are used as the motors. AC power is supplied to the converter 72 through a line breaker 5 and a transformer 50. Reactors 51, 52, 53 and 54 are inserted between the converter 72 and the respective DC motors 81, 91, 101 and 111 in order to reduce pulsating components of currents flowing through the DC motors.

As described above, according to the invention, the chance of an erroneous operation of the power converter can be reduced remarkably.

## Claims

1. A control system for an electric vehicle driven by an AC motor (8∼11), comprising:
an inverter (7) driven by a gate control signal (15) and outputting variable-voltage variable-frequency AC current to the motor;
a first microcomputer (14) having first signal input means (144) for receiving a start command signal (20) supplied from a master controller (16), for generating a PWM modulated gate control signal (15), and
a second microcomputer (34) having second signal input means (343) for receiving said start command signal (20) supplied from said master controller (16) for outputting a permitting signal to said first microcomputer (14) in response to the reception of said start command signal (20),
wherein said first microcomputer (14) outputs said gate control signal (15) for said inverter (7) only upon receipt of said permitting signal from said second microcomputer (34).

2. The control system of claim 1, wherein said first and second signal input means (144, 343) receive said start command signal (20) from said master controller (16) via first and second relays (31, 31a; 37, 37a), respectively.

3. The control system of claim 1 or 2, wherein said second microcomputer (34) includes means (341, 344, 345) for applying a simulation input signal (36) to said first microcomputer (14) to diagnose the operation of said first microcomputer on the basis of an output signal delivered by said first microcomputer (14) in response to said simultation input signal (36).

4. The control system of any one of claims 1 to 3, further comprising main circuit means (5, 6) for continuously connecting a power supply (1) to said inverter (7) throughout a plurality of frequencies of start and stop of said inverter (7).

## Patentansprüche

1. Steuersystem für ein von einem Wechselstrommotor (8∼11) angetriebenes Elektrofahrzeug, umfassend
einen mit einem Gate-Steuersignal (15) beaufschlagten Wechselrichter (7), der einen Wechselstrom variabler Spannung und variabler Frequenz an den Motor abgibt,
einen ersten Mikrocomputer (14) mit einem ersten Signaleingang (144) zur Aufnahme eines von einer Hauptsteuerung (16) zugeführten Startbefehlssignals (20), zur Erzeugung eines pulsbreiten-modulierten Gate-Steuersignals (15), und
einen zweiten Mikrocomputer (34) mit einem zweiten Signaleingang (343) zur Aufnahme des von der Hauptsteuerung (16) zugeführten Startbefehlssignals (20), wobei der zweite Mikrocomputer bei Empfang des Startbefehlssignals (20) ein Freigabesignal an den ersten Mikrocomputer (14) abgibt,
wobei der erste Mikrocomputer (14) das Gate-Steuersignal (15) für den Wechselrichter (7) nur bei Empfang des Freigabesignals von dem ersten Mikrocomputer (3) ausgibt.

2. Steuersystem nach Anspruch 1, wobei der erste und der zweite Signaleingang (144, 343) das Startbefehlssignal (20) von der Hauptsteuerung (16) über ein erstes bzw. ein zweites Relais (31, 31a; 37, 37a) empfangen.

3. Steuersystem nach Anspruch 1 oder 2, wobei der zweite Mikrocomputer (34) eine Einrichtung (341, 343, 345) zur Zuführung eines Simulations-Eingangssignals (36) an den ersten Mikrocomputer (14) aufweist, um dessen Arbeitsweise aufgrund eines Ausgangssignals zu diagnostizieren, das er bei Empfang des Simulations-Eingangssignals (36) abgibt.

4. Steuersignal nach einem der Ansprüche 1 bis 3, mit einer Hauptschaltung (5, 6), die den Wechselrichter (7) über eine Vielzahl wiederholter Start- und Stoppvorgänge hinweg kontinuierlich mit einer Stromquelle (1) verbindet.

## Revendications

1. Système de commande pour un véhicule électrique entraîné par un moteur à courant alternatif (8∼11), comprenant :
un onduleur (7) commandé par un signal de commande de transfert (15) et délivrant un courant alternatif de sortie à tension variable et à fréquence variable au moteur;
un premier micro-ordinateur (14) possédant des premiers moyens d'entrée de signal (144) pour recevoir un signal de commande de démarrage (20) envoyé par un dispositif de commande maître (16), pour la production d'un signal de commande de transfert (15) modulé selon une modulation MID, et
un second micro-ordinateur (34) possédant des seconds moyens d'entrée de signal (343) pour recevoir ledit signal de commande de démarrage (20) envoyé par ledit dispositif de commande maître (16) pour délivrer un signal d'autorisation audit premier micro-ordinateur (14) en réponse à la réception dudit signal de commande de démarrage (20),
ledit premier micro-ordinateur (14) délivrant ledit signal de commande de transfert (15) pour ledit onduleur (7) uniquement lors de la réception dudit signal d'autorisation délivré par ledit second micro-ordinateur (34).

2. Système de commande selon la revendication 1, dans lequel lesdits premiers et seconds moyens d'entrée de signal (144,343) reçoivent ledit signal de commande de démarrage (20) dudit dispositif de commande maître (16) respectivement par l'intermédiaire de premiers et seconds relais (31,31a;37,37a).

3. Système de commande selon la revendication 1 ou 2, dans lequel ledit second micro-ordinateur (34) comprend des moyens (341, 344 et 345) pour appliquer un signal d'entrée de simulation (36) audit premier micro-ordinateur (14) pour diagnostiquer le fonctionnement dudit premier micro-ordinateur sur la base d'un signal de sortie délivré par ledit premier micro-ordinateur (14) en réponse audit signal d'entrée de simulation (36).

4. Système de commande selon l'une quelconque des revendications 1 à 3, comportant en outre des moyens formant circuits principaux (5,6) pour la connexion continue d'une source d'alimentation (1) audit onduleur (7) pour une pluralité de fréquences de démarrage et d'arrêt dudit onduleur (7).
